# EUROPÄISCHE PATENTANMELDUNG

(11) **EP 2 579 218 A1**
(43) Veröffentlichungstag der Anmeldung: **10.04.2013**
(21) Anmeldenummer: 11183852.0
(22) Anmeldetag: 04.10.2011
(51) Int. Cl.: G07B 17/00, G07D 7/12, G07D 7/00, G07D 7/20

(54) **Postwertzeichen**

(71) Anmelder: Deutsche Post AG, 53113 Bonn (DE)
(72) Erfinder: Krüger, Jürgen, 32602 Vlotho (DE); Anthonj, Rainer, 77866 Rheingau (DE)
(74) Vertreter: Jostarndt, Hans-Dieter

(57) **Zusammenfassung**

Die Erfindung betrifft ein Wertdokument, insbesondere ein Postwertzeichen, mit einem maschinenlesbaren Sicherheitselement, welches einen Lumineszenzstoff enthält. Das erfindungsgemäße Postwertzeichen 1 enthält ein Substrat 2, auf dem ein Druckbild 10 aufgebracht ist. Ferner weist das erfindungsgemäße Postwertzeichen 1 einen Rand 3 und einen Bereich 15 auf, in dem sich die Wertangabe befindet. Weiterhin enthält das erfindungsgemäße Postwertzeichen 1 einen Aufdruck 20 aus einer Druckfarbe mit lumineszierenden Partikeln, die nach Anregung mit Licht enthaltend eine Wellenlänge aus einem ersten Spektralbereich Licht mit einer Wellenlänge aus einem zweiten Spektralbereich emittieren, wobei der Aufdruck 20 die Oberfläche des Postwertzeichens 1 nur teilweise bedeckt und die Form eines Rahmens aufweist.

## Beschreibung

Unter Postwertzeichen sollen bei dieser Erfindung alle Wertmarken und Wertlabel unabhängig von ihrer Aufbringungsart wie beispielsweise Aufkleben, Aufdrucken, Aufstempeln, oder ähnlich, verstanden werden. Insbesondere umfasst die Erfindung auch aufgedruckte Freimachungsvermerke.

Durch den Einsatz moderner Reproduktionstechniken wird es immer einfacher, Wertdokumente, wie beispielsweise Postwertzeichen, mit verhältnismäßig geringem Aufwand zu reproduzieren. Eine mit einem modernen Farbkopiergerät hergestellte Reproduktion eines Postwertzeichens kann mit bloßem Auge kaum vom Original unterschieden werden. Damit steigt die Gefahr von Fälschungen. Weiterhin besteht die Gefahr der unerlaubten Mehrfachverwendung von Original-Postwertzeichen. Dazu werden die Entwertungsvermerke benutzter Postwertzeichen unkenntlich gemacht, indem das entsprechende Postwertzeichen manipuliert wird. Beispielsweise wird versucht, durch Waschen des Postwertzeichens dieses für eine neue Verwendung zu präparieren. Unter Waschen wird in diesem Zusammenhang jede chemische und mechanische Behandlung verstanden, die auf eine Abtragung der die lumineszierenden Druckfarbe abdeckende Druckfarbe abzielt. Weiterhin sollen auch Verfahren wie beispielsweise Laserabtragung von diesem Begriff umfasst sein. Auch solche manipulierten Original-Postwertzeichen sollen im Weiteren mit dem Wort Fälschung erfasst sein.

Die Überprüfung der Freimachung von Postsendungen, insbesondere von Briefen, geschieht heutzutage üblicherweise automatisch. Dabei sollen gefälschte Postwertzeichen erkannt werden. Daneben soll aber auch die Mehrfachverwendung von Postwertzeichen erkannt werden. Darüber hinaus muss überprüft werden, ob der Wert des aufgebrachten Postwertzeichens mit dem für die jeweilige Sendung erforderlichen Wert übereinstimmt. Bei Briefen, insbesondere bei Großbriefen, ist es üblich, den erforderlichen Wert der Freimachung auf mehrere Postwertzeichen gestückelt aufzubringen. Zu den Anforderungen an eine Überprüfungseinrichtung gehört daher neben der Erkennung von Fälschungen die Erkennung von Entwertungen der Postwertzeichen, die Erkennung von mehreren Postwertzeichen auf einer Sendung, sowie das Auslesen deren einzelner Werte.

Um Fälschungen entgegenzuwirken, ist es bekannt, Wertpapiere durch eine besondere Codierung abzusichern. So offenbart beispielsweise die deutsche Offenlegungsschrift DE 196 49 874 A1 ein Wertpapier, das in einem bestimmten Bereich einen lumineszierenden Untergrund aufweist, der partiell durch einen farblich kontrastierenden Stoff, wie beispielsweise eine nichtlumineszierende Druckfarbe, abgedeckt ist. Die Gestalt und Anordnung der Abdeckung ergeben eine Codierung, die mit für das Dokument spezifischen Daten korreliert ist. Beim Lesen der Codierung wird das Dokument mit Anregungsstrahlung des Lumineszenzstoffes beleuchtet. Ein Detektor, der lediglich im Spektralbereich der Lumineszenzstrahlung empfindlich ist, wird nur die lumineszierenden Bereiche als "helle" Bereiche erkennen. Der übrige Teil des Dokuments sowie die Abdeckung in dem lumineszierenden Bereich erscheinen für den Sensor dunkel, sofern die Abdeckung im Wellenlängenbereich der Lumineszenzstrahlung nicht oder nur geringfügig reflektiert oder emittiert. Auf diese Weise wird ein starker Kontrast zwischen Untergrund und Abdeckung erzeugt, der eine einfache Lesbarkeit der Codierung ermöglicht.

Aus der deutschen Offenlegungsschrift DE 10 2006 017 764 A1 ist es bekannt, zumindest zwei unterschiedliche und mit verschiedener Emissionswellenlänge emittierende Lumineszenzstoffe an verschiedenen Orten der Oberfläche des Wert-und/oder Sicherheitsdokumentes anzuordnen, so dass sie ein Lumineszenzstoffmuster bilden, wobei jede Emissionswellenlänge einem Zeichen zugeordnet ist und wobei jeder Ort einer Zeichenposition zugeordnet ist, wodurch durch Auswahl der verschiedenen Lumineszenzstoffe in Verbindung mit deren Ort eine maschinenlesbare erste Zeichenfolge gebildet ist. Unter Einsatz eines geeigneten Energieeintrages zur Anregung der Luminszenz wird ein Muster mit verschiedenen Emissionswellenlängen verschiedener Lumineszenzstoffe maschinell erkennbar, welches eine kodierte Information enthält, die nach Decodierung mit anderen Informationen des Wertdokumentes zu Validierungszwecken verglichen werden kann.

Keine der im Stand der Technik bekannten technischen Lehren ist dazu geeignet, so auf Postwertzeichen angewendet zu werden, dass mehrere einzelne, auf eine Sendung aufgebrachte Postwertzeichen so detektiert werden können, dass Fälschungen sicher erkannt und gegebenenfalls ausgeschleust werden können. Dementsprechend sind diese Lehren auch nicht geeignet, die einzelnen Werte dieser Postwertzeichen zu erkennen, so dass sie aufsummiert werden können, um den Wert der auf die Sendung aufgebrachten Freimachung maschinell bestimmen zu können.

Aufgabe der vorliegenden Erfindung ist es daher, ein Postwertzeichen anzugeben, das so als einzelnes Postwertzeichen maschinell erkannt werden kann, dass Fälschungen erkannt und gegebenenfalls ausgeschleust werden können, auch wenn sich mehrere solcher Postwertzeichen auf einer Sendung befinden.

Erfindungsgemäß wird diese Aufgabe durch ein Postwertzeichen mit den Merkmalen des unabhängigen Anspruches 1 gelöst. Vorteilhafte Weiterbildungen des Postwertzeichens ergeben sich aus den Unteransprüchen 2 - 12.

Weiterhin ist es Aufgabe der Erfindung, ein Verfahren zur derartigen Detektion von entsprechenden Postwertzeichen auf zu transportierenden Sendungen anzugeben.

Diese Aufgabe wird erfindungsgemäß mit einem Verfahren mit den Merkmalen des Anspruchs 13 gelöst. Eine vorteilhafte Weiterbildung dieses Verfahrens ergibt sich aus dem Unteranspruch 14.

Das erfindungsgemäße Postwertzeichen enthält ein Substrat, auf dem ein Druckbild aufgebracht ist. Die Erfindung umfasst dabei auch Postwertzeichen, die unmittelbar auf ein Couvert oder eine Postkarte beispielsweise durch ein Druckverfahren aufgebracht werden. Das Couvert beziehungsweise die Postkarte selbst stellen in diesem Fall das Substrat dar. Das Druckbild kann dabei für das menschliche Auge unter tageslichtähnlicher Beleuchtung sichtbar oder unsichtbar sein. Ferner weist das erfindungsgemäße Postwertzeichen einen Rand und einen Bereich auf, in dem sich die Wertangabe befindet. Unter Rand wird in diesem Zusammenhang sowohl ein geschlossener Außenbereich um einen Innenbereich verstanden, als auch ein nicht geschlossener Bereich außerhalb eines Innenbereichs. Beispielsweise werden auch einzelne Bereiche unter dem Begriff Rand verstanden, sofern sie sich außerhalb eines anderen Bereichs befinden. Ein solcher einzelner Bereich kann beispielsweise ein einzelnes Rechteck sein, das auch paarweise um einen anderen Bereich angeordnet sein kann. Weiterhin enthält das erfindungsgemäße Postwertzeichen einen Aufdruck aus einer Druckfarbe mit lumineszierenden Partikeln, die nach Anregung mit Licht mit Wellenlängen aus einem ersten Spektralbereich Licht mit Wellenlängen aus einem zweiten Spektralbereich emittieren, wobei der Aufdruck die Oberfläche des Postwertzeichens nur teilweise bedeckt und die Form eines Rahmens aufweist. Auch unter dem Begriff Rahmen wird in diesem Zusammenhang sowohl ein geschlossener Außenbereich um einen Innenbereich verstanden, als auch ein nicht geschlossener Bereich außerhalb eines Innenbereichs. Beispielsweise werden auch einzelne Bereiche unter dem Begriff Rahmen verstanden, sofern sie sich außerhalb eines anderen Bereichs befinden. Ein solcher einzelne Bereich kann beispielsweise ein einzelnes Rechteck sein, das auch paarweise um einen anderen Bereich angeordnet sein kann.

Als Postwertzeichen kann ein Bereich einer Sendungsoberfläche definiert werden, der sich innerhalb eines lumineszierenden Rahmens beziehungsweise außerhalb des Rands befindet. Beispielsweise soll auch ein Bereich auf einer Sendungsoberfläche als Postwertzeichen erkannt werden, der sich zwischen zwei lumineszierende Partikel enthaltenden Rechtecken befindet. Dadurch ist es möglich, einzelne Postwertzeichen maschinell erkennen zu können, auch wenn sie unmittelbar nebeneinander auf einer Sendung aufgebracht sind. Dabei kann es sich auch um unterschiedliche Postwertzeichen handeln, also beispielsweise um auf eine Sendungsoberfläche aufgeklebte oder unmittelbar auf die Sendungsoberfläche aufgedruckte Postwertzeichen. Auch ist eine Mischform vorstellbar, bei der sich beispielsweise aufgeklebte und unmittelbar aufgedruckte Postwertzeichen nebeneinander auf derselben Sendungsoberfläche befinden.

In einer vorteilhaften Ausführungsform weist der lumineszierende Aufdruck eine kodierte Information auf. Die Information kann durch teilweises Abdecken des lumineszierenden Aufdrucks aufgebracht werden. Dies kann durch Bedrucken mit einer Druckfarbe geschehen, die keine lumineszierenden Partikel enthält, die Licht mit Wellenlängen aus einem zweiten Spektralbereich ausstrahlen, also Wellenlängen, die der rahmenförmige Aufdruck emittiert. Ebenso ist es möglich, die Information durch Maskieren der lumineszierenden Druckfarbe, beispielsweise durch partielles Bedrucken mit einer nicht lumineszierenden Druckfarbe, einzubringen. Dies kann beispielsweise durch Lasergravur oder mechanische Gravur erfolgen. Wird das Postwertzeichen mit Licht mit Wellenlängen aus einem ersten Spektralbereich angestrahlt, das dazu geeignet ist, die Lumineszenz der eingesetzten Partikel anzuregen, so wird der rahmenförmige Aufdruck hell aufleuchten, während sowohl andere Bereiche, die nicht mit entsprechenden lumineszierende Partikel enthaltenden Druckfarbe bedruckt sind, als auch die Bereiche, an denen der lumineszierende Aufdruck partiell entfernt oder abgedeckt wurde, dunkel erscheinen. Die Information kann somit in Form der dunklen Zeichen ausgelesen werden.

In einer bevorzugten Ausführungsform enthält die Information den Wert des Postwertzeichens. Dadurch wird die automatische Erkennung des Wertes erleichtert und ein Fälschen der Wertangabe erschwert. Insbesondere kann dieser in kodierter Form vorliegende Wert mit dem in Klarschrift aufgedruckten Wert verglichen werden.

Es hat sich als vorteilhaft erwiesen, wenn die kodierte Information in Form eines Barcodes vorliegt.

In einer weiteren vorteilhaften Ausführungsform weist der rahmenförmige Aufdruck bei tageslichtähnlicher Beleuchtung die gleiche Farbe wie das Substrat des Postwertzeichens auf. Postwertzeichen weisen üblicherweise einen weißen Rand auf, der eine glatte oder eine gezahnte Begrenzung aufweisen kann. Befindet sich der rahmenförmige lumineszierende Aufdruck auf diesem Rand und weist er unter tageslichtähnlicher Beleuchtung ebenfalls die Farbe Weiß auf, ist er mit bloßem Auge unter tageslichtähnlicher Beleuchtung nicht zu erkennen. Auch die in den Aufdruck eingebrachte Information ist auf diese Art mit bloßem Auge nicht zu erkennen.

In einem bevorzugten Ausführungsbeispiel erstreckt sich der rahmenförmige lumineszierende Aufdruck nicht auf den Rand des Postwertzeichens. Postwertzeichen werden üblicherweise im Bogen hergestellt, wobei die einzelnen Postwertzeichen ausgestanzt werden. Die Stanzung kann einen Rand mit ungezahnter oder gezahnter Begrenzung aufweisen. Würde sich der Aufdruck auf diesen Rand ausdehnen, verblieben an dem Bogen Bereiche, die ebenfalls den lumineszierenden Aufdruck aufwiesen. Die Restbögen, aus denen die Postwertzeichen bereits entnommen wurden, könnten in Umlauf kommen. Würde ein solcher Bogen ganz oder teilweise auf eine zu transportierende Sendung aufgebracht, könnte die maschinelle Kontrolle auf Vorhandensein von Postwertzeichen den Aufdruck detektieren und fälschlich auf das Vorhandensein von Postwertzeichen schließen. Wird der rahmenförmige Aufdruck auf den Bereich des Postwertzeichens innerhalb des Rands begrenzt, wird dieses Risiko vermieden.

Alternativ oder auch zusätzlich ist es möglich, den lumineszierenden Aufdruck unmittelbar um den Bereich zu platzieren, in dem sich die Wertangabe des Postwertzeichens befindet. Dadurch kann bei der automatischen Freimachungsprüfung dieser Bereich schnell erkannt werden, was das Auslesen der Wertangabe erleichtert.

Bei dem erfindungsgemäßen Verfahren wird die gesamte, ein erfindungsgemäßes Postwertzeichen enthaltende Sendungsoberfläche mit Licht mit Wellenlängen aus einem ersten Spektralbereich beleuchtet, das dazu geeignet ist, die lumineszierenden Partikel des Aufdrucks anzuregen. Anschließend wird die Sendungsoberfläche auf das Vorhandensein eines lumineszierenden rahmenförmigen Aufdrucks überprüft und bei Detektion eines solchen Aufdrucks der Wert des Postwertzeichens ausgelesen. Anschließend wird die Sendungsoberfläche auf das Vorhandensein weiterer lumineszierenden rahmenförmigen Aufdrucke überprüft und gegebenenfalls die Werte der weiteren erkannten Postwertzeichen ausgelesen.

In einer vorteilhaften Weiterbildung des erfindungsgemäßen Verfahrens wird der rahmenförmige lumineszierende Aufdruck zusätzlich auf Vollständigkeit und Unversehrtheit überprüft, wobei der Wert eines Postwertzeichens nur ausgelesen wird, wenn die Überprüfung zu einem positiven Ergebnis geführt hat. Postwertzeichen werden üblicherweise durch Stempeln oder Bedrucken mit einem Entwertungsstempel entwertet. Die verwendete Druck- oder Stempelfarbe enthält üblicherweise keine lumineszierenden Partikel. Der Entwertungsdruck beziehungsweise der Entwertungsstempelabdruck ist größer als ein Postwertzeichen, so dass er den äußeren Rand eines Postwertzeichens mindestens an einer Stelle überdeckt. An dieser Stelle wird der rahmenförmige Aufdruck unter entsprechender Beleuchtung dunkel erscheinen und damit bei der Detektion des rahmenförmigen Aufdrucks der Rahmen als nicht unversehrt erkannt werden. Es kann somit zusätzlich die Verwendung eines bereits entwerteten Postwertzeichens erkannt werden.

Selbstverständlich kann die Entwertung auch durch zumindest partielles Entfernen des lumineszierenden, rahmenförmigen Aufdrucks, beispielsweise durch Gravur, erfolgen.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
Fig. 1 ein erfindungsgemäßes Postwertzeichen unter tageslichtähnlicher Beleuchtung,
Fig. 2 ein erfindungsgemäßes Postwertzeichen unter Beleuchtung mit Licht enthaltend eine Wellenlänge, die die Lumineszenz der eingesetzten Partikel anregt,
Fig. 3 einen Teil der Oberfläche einer Sendung mit mehreren erfindungsgemäßen Postwertzeichen unter Beleuchtung mit Licht enthaltend eine Wellenlänge, die die Lumineszenz der eingesetzten Partikel anregt,
Fig. 4 ein erfindungsgemäßes Postwertzeichen unter Beleuchtung mit Licht enthaltend eine Wellenlänge, die die Lumineszenz der eingesetzten Partikel anregt.

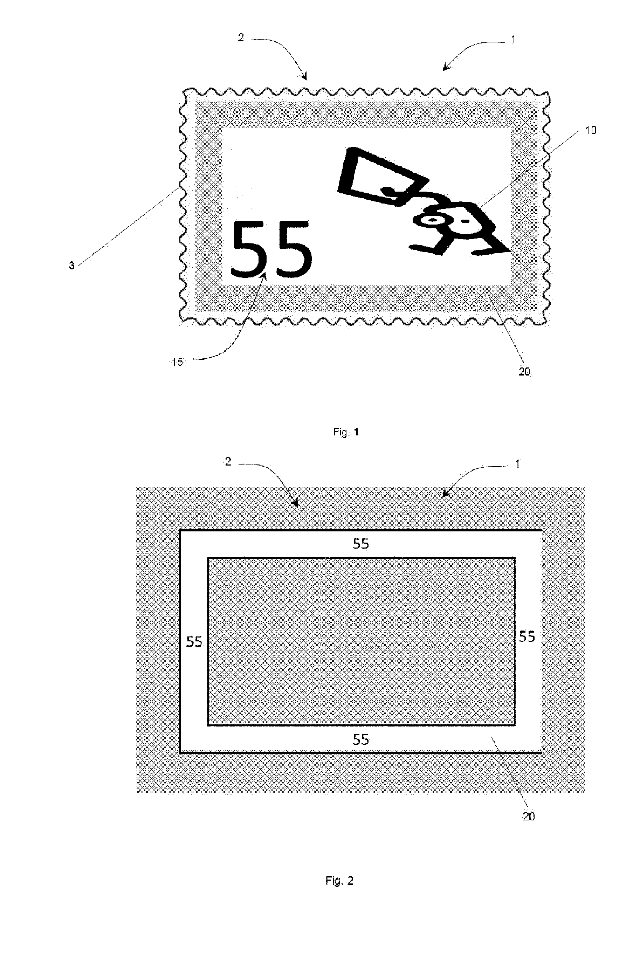

Fig.1 ist die schematische Darstellung eines erfindungsgemäßen Postwertzeichens 1. Das Postwertzeichen enthält ein Substrat 2, auf dem ein Druckbild 10 und ein Aufdruck 20 aufgedruckt ist. Der lumineszierende Aufdruck 20 ist typischerweise nicht unter tageslichtähnlicher Beleuchtung sichtbar, zur besseren Darstellung aber in Fig. 1 kreuzschraffiert dargestellt. Ferner weist das Postwertzeichen 1 einen gezahnten Rand 3 und einen Bereich 15 auf, in dem sich die Wertangabe befindet. Der Aufdruck 20 ist mit einer Druckfarbe aufgebracht, die lumineszierende Partikel enthält, die nach Anregung mit Licht enthaltend eine Wellenlänge aus einem ersten Spektralbereich Licht enthaltend eine Wellenlänge aus einem zweiten Spektralbereich emittiert. Der Aufdruck bedeckt die Oberfläche des Postwertzeichens 1 nur teilweise und weist die Form eines Rahmens auf.

Fig. 2 stellt ein erfindungsgemäßes Postwertzeichen 1 unter Beleuchtung mit Licht enthaltend eine die Lumineszenz der eingesetzten Partikel anregende ersten Wellenlänge dar. Der lumineszierende Aufdruck 20 weist eine kodierte Information auf. Die Information kann durch teilweises Abdecken des lumineszierenden Aufdrucks 20 aufgebracht werden. Dies kann durch Bedrucken mit einer Druckfarbe geschehen, die keine lumineszierenden Partikel enthält, die Licht mit Wellenlängen aus einem zweiten Spektralbereich ausstrahlen, also Wellenlängen aus dem Spektralbereich, den der rahmenförmige Aufdruck emittiert, wenn er mit Licht enthaltend Wellenlängen aus dem ersten Spektralbereich beleuchtet wird. Ebenso ist es möglich, die Information durch partielles Entfernen der lumineszierenden Druckfarbe einzubringen. Dies kann beispielsweise durch Lasergravur oder mechanische Gravur erfolgen. Wird das Postwertzeichen 1 mit Licht enthaltend eine Wellenlänge aus dem ersten Spektralbereich angestrahlt, das dazu geeignet ist, die Lumineszenz der eingesetzten Partikel anzuregen, so wird der rahmenförmige Aufdruck hell aufleuchten, wohingegen andere Bereiche, die nicht mit einer entsprechende lumineszierende Partikel enthaltenden Druckfarbe bedruckt sind, als auch die Bereiche, an denen der lumineszierende Aufdruck partiell entfernt oder abgedeckt wurde, dunkel erscheinen. Diese dunkel erscheinenden Bereiche sind in Fig. 2 kreuzschraffiert dargestellt. Die Information kann somit in Form der dunklen Zeichen ausgelesen werden. In der in Fig. 2 dargestellten Ausführungsform enthält der Aufdruck 20 die Information des Wertes des Postwertzeichens 1. Dadurch wird die automatische Erkennung des Wertes erleichtert und ein Fälschen der Wertangabe erschwert.

In einem bevorzugten Ausführungsbeispiel erstreckt sich der rahmenförmige lumineszierende Aufdruck 20 nicht auf den gezahnten Rand 3 des Postwertzeichens 1. Postwertzeichen 1 werden üblicherweise im Bogen hergestellt, wobei die einzelnen Postwertzeichen 1 ausgestanzt werden. Die Stanzung weist einen gezahnten Rand 3 auf. Würde sich der Aufdruck 20 auf diesem genzahnten Rand 3 ausdehnen, verblieben an dem Bogen Bereiche, die ebenfalls den lumineszierenden Aufdruck 20 aufwiesen. Die Restbögen, aus denen die Postwertzeichen 1 bereits entnommen wurden, könnten in Umlauf kommen. Würde ein solcher Bogen ganz oder teilweise auf eine zu transportierende Sendung aufgebracht, könnte die maschinelle Kontrolle auf Vorhandensein von Postwertzeichen 1 den Aufdruck 20 detektieren und fälschlich auf das Vorhandensein von Postwertzeichen 1 schließen. Wird der rahmenförmige Aufdruck 20 auf den Bereich des Postwertzeichens innerhalb des gezahnten Rands begrenzt, wird dieses Risiko vermieden.

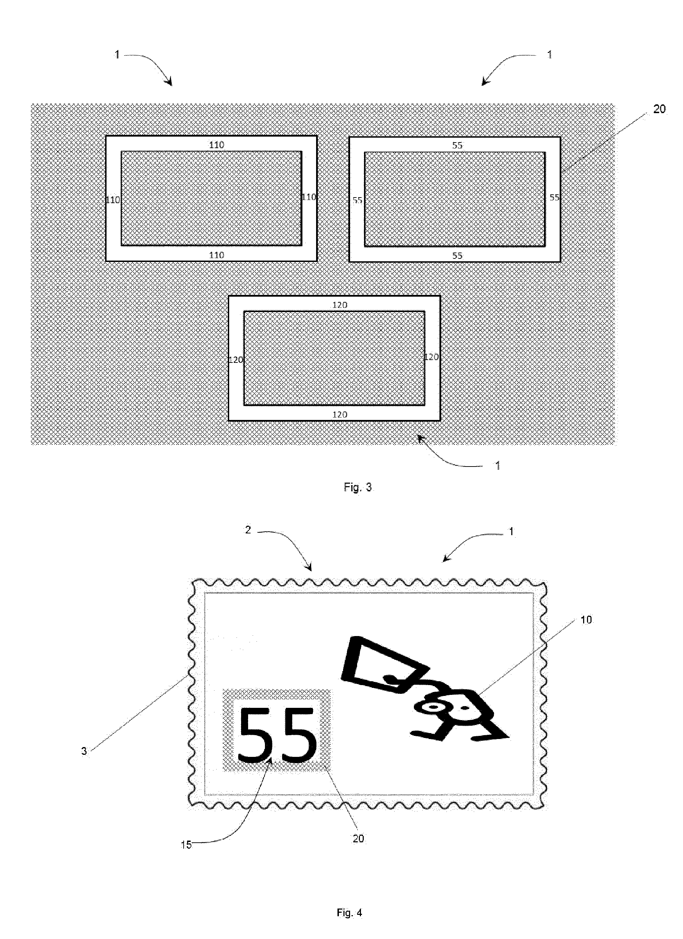

In Fig. 3 ist ein Ausschnitt einer Sendungsoberfläche dargestellt, auf der mehrere erfindungsgemäße Postwertzeichen 1 aufgebracht sind. Unter Beleuchtung mit Licht enthaltend eine die Lumineszenz der eingesetzten Partikel anregende erste Wellenlänge leuchten die Aufdrucke 20 auf jedem Postwertzeichen 1 hell auf, während die Bereiche, die keine unter solcher Beleuchtung lumineszierenden Partikel enthalten, dunkel erscheinen. Diese dunkel erscheinenden Bereiche sind in Fig. 3 kreuzschraffiert dargestellt. Der lumineszierende Aufdruck 20 weist eine kodierte Information auf. Die Information kann durch teilweises Abdecken des lumineszierenden Aufdrucks 20 aufgebracht werden. Dies kann durch Bedrucken mit einer Druckfarbe geschehen, die keine lumineszierenden Partikel enthält, die Licht enthaltend Wellenlängen aus dem zweiten Spektralbereich ausstrahlen, wenn sie mit Licht enthaltend eine Wellenlänge aus dem ersten Spektralbereich beleuchtet werden. Ebenso ist es möglich, die Information durch partielles Entfernen der lumineszierenden Druckfarbe einzubringen. Dies kann beispielsweise durch Lasergravur oder mechanische Gravur erfolgen. Wird das Postwertzeichen 1 mit Licht enthaltend eine Wellenlänge aus dem ersten Spektralbereich angestrahlt, das dazu geeignet ist, die Lumineszenz der eingesetzten Partikel anzuregen, so wird der rahmenförmige Aufdruck 20 hell aufleuchten, wohingegen andere Bereiche, die nicht mit einer entsprechende lumineszierende Partikel enthaltenden Druckfarbe bedruckt sind, als auch die Bereiche, an denen der lumineszierende Aufdruck partiell entfernt oder abgedeckt wurde, dunkel erscheinen. Die Information kann somit in Form der dunklen Zeichen ausgelesen werden. In der in Fig. 2 dargestellte Ausführungsformen enthalten die Aufdrucke 20 der jeweiligen Postwertzeichen 1 die Information des jeweils unterschiedlichen Wertes des jeweiligen Postwertzeichens 1. Der jeweils sich im Inneren eines lumineszierenden rahmenförmigen Aufdrucks 20 befindende Bereich einer Sendungsoberfläche kann als Postwertzeichen 1 definiert werden Dadurch ist es möglich, einzelne Postwertzeichen 1 maschinell erkennen zu können, auch wenn sie unmittelbar nebeneinander auf einer Sendung aufgebracht sind. Dazu wird die gesamte Sendungsoberfläche mit Licht enthaltend eine Wellenlänge aus einem ersten Spektralbereich beleuchtet, die dazu geeignet ist, die lumineszierenden Partikel in der Druckfarbe, mit der der Aufdruck 20 gedruckt ist, anzuregen, Licht enthaltend Wellenlängen aus einem zweiten Spektralbereich zu emittieren. Dabei können der erste und zweite Spektralbereich teilweise oder ganz übereinstimmen. In einem bevorzugten Ausführungsbeispiel stimmen die beiden Spektralbereiche aber nicht überein, so dass es leicht möglich ist, zu erkennen, ob ein entsprechendes Postwertzeichen auf einer Sendung aufgebracht ist. Wenn ein Detektor für eine Wellenlänge aus dem zweiten Spektralbereich auch ohne Abschattung von der Beleuchtungsquelle, die Licht enthaltend Wellenlängen aus dem ersten Spektralbereich aussendet, das Vorhandensein von Licht enthaltend eine Wellenlänge aus dem zweiten Spektralbereich detektiert, wird davon ausgegangen, dass ein entsprechendes Postwertzeichen auf der Sendung aufgebracht ist.

In Fig. 4 ist eine alternative Ausführungsform des erfindungsgemäßen Postwertzeichens 1 dargestellt. Der lumineszierende Aufdruck 20 ist unmittelbar um den Bereich 15 platziert, in dem sich die Wertangabe des Postwertzeichens 1 befindet.

Dadurch kann bei der automatischen Freimachungsprüfung dieser Bereich 15 schnell erkannt werden, was das Auslesen der Wertangabe erleichtert. Es ist aber auch möglich, diese Ausführungsform mit der ersten Ausführungsform, bei der der Aufdruck 20 nahe am Rand des Postwertzeichens 1 aufgebracht ist, zu kombinieren. Auch ist es möglich, ein Postwertzeichen 1 mit einem randnahen Aufdruck 20 auszustatten und zusätzlich den Bereich 15 der Wertangabe mit einem entsprechenden lumineszierenden Hintergrund zu versehen. Die Erkennung als Postwertzeichen geschieht in diesem Fall über die Detektion des rahmenförmigen Aufdrucks 20, während die Auslesung des Wertes des Postwertzeichens 1 durch den starken Kontrast des mit nicht entsprechend lumineszierender Druckfarbe aufgedruckten Wertes auf dem lumineszierenden Hintergrund bei entsprechender Beleuchtung erleichtert wird. Wenn der Wert des Postwertzeichens 1 zusätzlich in beispielsweise der zuvor beschriebenen Form kodiert aufgebracht ist, können die ausgelesenen Werte zur Überprüfung auf das Vorliegen einer Fälschung verglichen werden.

Die in den Figuren dargestellten Ausführungsbeispiele der Postwertzeichen weisen jeweils einen gezahnten Rand auf. Selbstverständlich ist die Erfindung nicht auf solchen gezahnten Ränder beschränkt, sondern ebenso auf Postwerkzeichen mit ungezahnten Rändern anzuwenden. Darüber hinaus kann die Erfindung auch auf Postwertzeichen angewendet werden, die nicht auf eine Sendung aufgeklebt werden, sondern als Freimachungsvermerk auf eine Sendung aufgedruckt oder aufgestempelt sind.

### Bezugszeichenliste

- 1: Postwertzeichen
- 2: Substrat
- 3: Rand
- 10: Druckbild
- 15: Bereich für Wertangabe
- 20: Aufdruck

## Patentansprüche

1. Postwertzeichen (1), enthaltend ein ein Druckbild (10) aufweisendes Substrat (2), weiterhin aufweisend einen Rand (3), einen Bereich (15) mit der Angabe des Wertes, und einen Aufdruck (20) aus einer Druckfarbe mit lumineszierenden Partikeln, die nach Anregung mit Licht enthaltend eine Wellenlänge aus einem ersten Spektralbereich Licht enthaltend eine Wellenlänge aus einem zweiten Spektralbereich emittieren, wobei der Aufdruck (20) die Oberfläche des Postwertzeichens (1) nur teilweise bedeckt,
**dadurch gekennzeichnet,**
**dass** der Aufdruck (20) die Form eines Rahmens aufweist.

2. Postwertzeichen (1) nach Anspruch 1,
**dadurch gekennzeichnet,**
**dass** der Aufdruck (20) mit einer kodierten Information versehen ist.

3. Postwertzeichen (1) nach Anspruch 2,
**dadurch gekennzeichnet,**
**dass** die kodierte Information den Wert des Postwertzeichens (1) enthält.

4. Postwertzeichen (1) nach Anspruch 2 oder 3,
**dadurch gekennzeichnet,**
**dass** die kodierte Information durch teilweise Abdeckung des Aufdrucks (20) mit einer Druckfarbe aufgebracht ist, die keine lumineszierenden Partikel enthält, die Licht mit einer Wellenlänge aus dem zweiten Spektralbereich emittieren.

5. Postwertzeichen (1) nach Anspruch 2 oder 3,
**dadurch gekennzeichnet,**
**dass** die kodierte Information durch partielles Entfernen der lumineszierenden Druckfarbe eingebracht ist.

6. Postwertzeichen (1) nach Anspruch 5,
**dadurch gekennzeichnet,**
**dass** das partielle Entfernen der lumineszierenden Druckfarbe durch Lasergravur vorgenommen ist.

7. Postwertzeichen (1) nach Anspruch 5,
**dadurch gekennzeichnet,**
**dass** das partielle Entfernen der lumineszierenden Druckfarbe durch mechanische Gravur vorgenommen ist.

8. Postwertzeichen (1) nach einem der Ansprüche 2 bis 7,
**dadurch gekennzeichnet,**
**dass** die kodierte Information in Form eines Barcodes vorliegt.

9. Postwertzeichen (1) nach einem der vorhergehenden Ansprüche,
**dadurch gekennzeichnet,**
**dass** der Aufdruck (20) bei tageslichtähnlicher Beleuchtung die gleiche Farbe wie das Substrat (2) aufweist.

10. Postwertzeichen (1) nach einem der vorhergehenden Ansprüche,
**dadurch gekennzeichnet,**
**dass** sich der Aufdruck (20) auf dem äußeren Rand des Postwertzeichens (1) befindet.

11. Postwertzeichen (1) nach Anspruch 10,
**dadurch gekennzeichnet,**
**dass** sich der Aufdruck (20) nicht auf den Rand (3) des Postwertzeichens (1) erstreckt.

12. Postwertzeichen (1) nach einem der Ansprüche 1 bis 9,
**dadurch gekennzeichnet,**
**dass** sich der Aufdruck (20) um den Bereich (15) befindet, in dem sich die Wertangabe des Postwertzeichens (1) befindet, wobei andere Bereiche des Postwertzeichens sich außerhalb des rahmenförmigen Aufdrucks (20) befinden.

13. Verfahren zur derartigen Detektion von mit einem lumineszierenden, rahmenförmigen Aufdruck (20) versehenen Postwertzeichen (1) auf zu transportierenden Sendungen, dass Fälschungen erkannt werden können, umfassend die Schritte
- Beleuchtung der gesamten, das Postwertzeichen (1) enthaltenden Sendungsoberfläche mit Licht enthaltend eine Wellenlänge aus einem ersten Spektralbereich, das dazu geeignet ist, die eingesetzten lumineszierenden Partikel anzuregen,
- Überprüfung auf das Vorhandensein des lumineszierenden rahmenförmigen Aufdrucks (20),
- Auslesen des Wertes des Postwertzeichens (1),
- Überprüfung auf das Vorhandensein weiterer lumineszierenden rahmenförmigen Aufdrucke (20), sowie
- bei Detektion weiterer Aufdrucke (20) Auslesen der Werte der weiteren Postwertzeichen (20).

14. Verfahren nach Anspruch 13,
weiterhin enthaltend den Schritt der Überprüfung auf die Unversehrtheit des rahmenförmigen lumineszierenden Aufdrucks (20), wobei der Wert eines Postwertzeichens (1) nur ausgelesen wird, wenn der Aufdruck (20) in Form eines vollständigen und unversehrten Rahmens vorliegt.
